(19) Europäisches Patentamt / European Patent Office / Office européen des brevets

(11) EP 4 578 885 A1

(12) EUROPEAN PATENT APPLICATION

(43) Date of publication:
**02.07.2025 Bulletin 2025/27**

(21) Application number: **23220887.6**

(22) Date of filing: **31.12.2023**

(51) International Patent Classification (IPC):
***C08G 8/10*** *(2006.01)* ***C09J 161/06*** *(2006.01)*
***C09D 161/06*** *(2006.01)* *C08K 5/3442 (2006.01)*

(52) Cooperative Patent Classification (CPC):
(C-Sets available)
**C08G 8/10; C09D 161/06;** C08K 5/3442 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Prefere Resins Holding GmbH**
**15537 Erkner (DE)**

(72) Inventors:
- **GARTNER, Clemens**
  **3500 KREMS (AT)**
- **PROCK, Christoph**
  **3910 ZWETTL (AT)**
- **ROMANSKA, Anna**
  **3500 KREMS (AT)**
- **WINTER, Johannes Georg, Dr.**
  **58239 SCHWERTE (DE)**

(74) Representative: **Deckers, Hellmuth Alexander**
**Kanzlei Dr. Deckers**
**Breitbachstrasse 15**
**55218 Ingelheim am Rhein (DE)**

# (54) LOW FORMALDEHYDE PHENOLIC RESINS

(57) This invention relates to a phenolic resin composition R based on phenolic resins P made by reaction of hydroxyaromatic compounds H having at least one hydroxyl group -OH in its molecule, and (cyclo)aliphatic aldehydes A having at least one aldehyde group -C(H)=O in its molecule, which phenolic resin composition R further comprises a formaldehyde scavenger S which comprises at least one cyclic urea UC which is selected from the group consisting of alkylene ureas, to a process of its preparation, and to its application preferably in coated abrasives.

(52) Cooperative Patent Classification (CPC): (Cont.)

C-Sets
**C09D 161/06, C08K 5/21;**
**C09D 161/06, C08K 5/21, C08K 5/20**

## Description

Field of the Invention

This invention relates to phenolic resins with low propensity to release formaldehyde, to a method of preparation thereof, and to their application, preferably in abrasive materials such as coated abrasives.

Background of the Invention

The use of phenolic resins made from phenol or its homologues, such as cresols and xylenols, and formaldehyde in abrasive compositions for grinding wheels or coated abrasives has been described by Leo Baekeland in the patent US 942,808 A issued on December 07, 1909. Tolerable concentrations of formaldehyde in the air have been reduced ever since, most recently to 0.008 $mg/m^3$ or less, as recently decided by the EU commission on July 14, 2023 in the amendment of Annex XVII to Regulation (EC) 1907/2006. This limit is difficult to meet with formaldehyde scavengers having been in use before, such as those described in US patent 5,270,343 A issued on December 14, 1993 (phenol-formaldehyde-alkanolamine condensates) and US patent 5,358,758 A issued on October 25, 1994 (nitrogen heterocyclic compounds having replaceable hydrogen atoms attached to an amine, such as melamine and alkanoguanamines, or a guanidine compound such as guanidine itself, and 2-cyanoguanidine).

It has been found in the experiments that have been the basis for the present invention that formaldehyde or other gaseous substances generated during the curing process of phenolic resins give rise to formation of blisters, bubbles, and voids within the cured resin. Such inclusions within the cured resin may impair its physical properties, and therefore also its usability in technical applications. For instance, in the application as make coat in coated abrasives, the adhesive layer between the abrasive particles and the backing would be weakened by such blisters, bubbles, and voids within the cured resin. These inclusions may also lower the mechanical stability of the matrix formed by the moulded and cured resin in a bonded abrasive, in addition to those pores which are intentionally created to capture the grinding dust.

Object of the Invention

It is therefore the object of the present invention to provide a phenolic resin composition that does not liberate formaldehyde or other gaseous substances during the curing step in an amount which leads to environmental problems, and or to formation of undesired blisters, bubbles, and voids within the cured resin. Further, the mass fraction *w*(FFA) of free formaldehyde as measured according to DIN EN ISO 11402 (hydroxylamine hydrochloride procedure) is to be reduced below 0.1 %, where *w*(FFA) = *m*(FFA) / *m*(TPPF), *m*(FFA) standing for the mass of free formaldehyde found in the test portion of phenolic resin composition, and *m*(TPPF) standing for the mass of the test portion of phenolic resin composition.

Summary of the Invention

This object has been realised by providing a phenolic resin composition **R** based on phenolic resins **P** made by reaction of hydroxyaromatic compounds **H** having at least one hydroxyl group -OH bound to an aromatic carbon atom in its molecule, and (cyclo)aliphatic aldehydes **A** having at least one aldehyde group -C(H)=O in its molecule, which phenolic resin composition **R** further comprises a formaldehyde scavenger composition **S** which comprises at least one urea derivative **U** comprising a cyclic urea **UC** which is selected from the group consisting of alkylene ureas of formula I

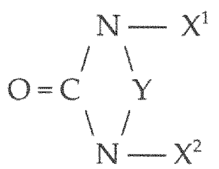

Formula I

where $X^1$ and $X^2$ are selected, independently from each other, from the group consisting of hydrogen atoms **H,** and alkyl groups having from one to ten carbon atoms, preferably, methyl, ethyl, butyl, n-hexyl, octyl, and nonyl, and Y is an optionally substituted alkanediyl group, or alkenediyl group, or cycloalkanediyl group having from two to ten, preferably from two to six, carbon atoms. At least one of $X^1$ and $X^2$ is a hydrogen atom. Unsubstituted divalent groups Y are preferably selected from the group consisting of ethane-1,2-diyl, propane-1,2-diyl, propane-1,3-diyl, butane-1,2-diyl, butane-1,3-diyl, butane-2,3-diyl, butane-1,4-diyl, and cyclohexane-2,3-diyl. One or more of the hydrogen atoms of the divalent group Y in formula I may also be substituted, preferably by a hydroxyl group, such as in 4-hydroxyimidazolidin-2-one, 4,5-dihydroxyimidazolidin-2-one, and 5,6-dihydroxy-1,3-diazepan-2-one, or by a hydroxyethyl group such as in 4-(2-hydroxyethyl)imidazolidin-2-one.

The formaldehyde scavenger S may also comprise at least one of a cyclic urea **UCT** which is selected from the group consisting of alkylene thioureas of formula II

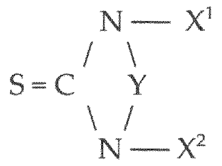

Formula II

where $X^3$ and $X^4$ are selected, independently from each other, from the group consisting of hydrogen atoms H, alkyl groups having from one to ten carbon atoms, preferably, methyl, ethyl, butyl, n-hexyl, octyl, and nonyl, and Y is an optionally substituted alkanediyl or cycloalkanediyl group having from two to ten, preferably from two to six, carbon atoms, and at least one of $X^3$ and $X^4$ is a hydrogen atom.

Other urea derivatives **U** useful as additional formaldehyde scavengers, together with the cyclic ureas **UC** of formula **I,** and/or the cylic ureas **UCT** of formula **II,** include cyclic ureides **UC'** derived from organic dicarboxylic acids and urea or thiourea, such as parabanic acid, barbituric acid, uric acid, and their thio analogues, and bisureas **BU** derived from oligomeric or polymeric primary diamines, preferably oligo- or poly-oxyalkylene amines **D** having at least two primary amino groups in their molecule, by reaction thereof with urea or thiourea, where the primary diamine D of formula III

$H_2N$ - **Z** -$NH_2$ (Formula III),

wherein **Z** is a polymeric or oligomeric oxyalkylene group of formula IV

$-CH_2-CHR-(O-CH_2-CHR'-)_n-$, (Formula IV)

wherein n is at least one, and up to fifteen, and R and any of R' are selected, independently from each other, from -H and $-CH_3$, and

wherein the ratio $n(U) / n(D)$ of the amount of substance of urea $n(U)$ and the amount of substance $n(D)$ of the primary diamine **D** in the reaction of both is at least 1 mol/mol, and not more than 2 mol/mol.

It has further been found in the experiments which have led to the present invention that the additional presence in the formaldehyde scavenger composition **S** of small amounts of linear or branched aliphatic amino acids **AA** having one carboxyl group and at least one amino group, and a number of carbon atoms of from two to twelve, such as glycine (aminoacetic acid), sarcosine (N-methylamino acetic acid), alanine (alpha-aminopropionic acid), β-alanine (beta-aminopropionic acid), valine (α-aminoisovalerianic acid). Further useful additives in the in the formaldehyde scavenger composition **S** are aliphatic aminoureido acids **AU,** such as citrtallin [2-amino-5-ureidovaleric acid $H_2N-CO-N(H)-(-CH_2)_3-CH(NH_2)-C(O)-OH$].

The mass fraction of these additives **UCT, UC', BU, AA,** and **AU** in the formaldehyde scavenger composition **S,** each of which additives may, or may not be present in the formaldehyde scavenger composition **S,** together with the cyclic urea **CU,** in the phenolic resin composition **R,** is

$$[m(UCT) + m(UC') + m(BU) + m(AA) + m(AU)] / m(S),$$

where the symbol $m$(XXX) in this formula stands for the mass of each of these additives **XXX** which may be present in a formaldehyde scavenger composition **S,** together with the cyclic urea **CU,** is preferably from 0 to 0.5, more preferred, from 0.02 to 0.4, and most preferred, from 0.05 to 0.3. Accordingly, the mass fraction of cyclic ureas **CU** in the formaldehyde scavenger composition **S** is, for these cases, from 1 to 0.5, from 0.98 to 0.6, and from 0.95 to 0.6.

Detailed Discussion of the Preferred Embodiments

The phenolic resin composition comprises at least one phenolic resin P made by reaction of hydroxyaromatic compounds H having at least one hydroxyl group -OH in its molecule, and (cyclo)aliphatic aldehydes **A** having at least one aldehyde group -C(H) = O in its molecule. In the synthesis of phenolic resins **P,** the ratio $n(A') / n(H)$ of the amount of substance $n(A')$ of aldehyde groups -C(H)=O in the (cyclo)aliphatic aldehydes **A** to the amount of substance $n(H)$ of hydroxyaromatic compounds **H** preferably obeys the relation

$$1.1\ \text{mol/mol} \leq n(\text{A}') / n(\text{H}) \leq 3.0\ \text{mol/mol}.$$

It is also possible, within the scope of the present invention, to replace all, or a part of, the hydroxyaromatic compounds **H** by lignins isolated from lignocellulosic biomass such as hardwood pulp, softwood pulp, or nonwood pulp, such as from cotton, hemp, or jute, wheat straw, pine straw, alfalfa, kenaf, and flax fibre. For these cases, the amount of substance of reactive hydrogen atoms H* bound to an aromatic ring is usually lower than that calculated from the stoichiometry, due to sterical effects.

The cyclic ureas C according to formula I can easily be prepared, e. g., by the reaction of carbon dioxide and diamines with cerium dioxide catalysis as detailed by M. Tamura et al, Green Chemistry 15, 2013, pages 1567 to 1577.

The mass fraction *w*(S) of the formaldehyde scavenger composition **S** in the mixture **R** of **S** and **P** is calculated as the ratio of the mass *m*(S) of the formaldehyde scavenger **S,** divided by the mass *m*(R) of the phenolic resin composition **R** which is the sum of the mass *m*(P) of the phenolic resin **P** and the mass *m*(S) of the formaldehyde scavenger **S** composition:

$$m(\text{R}) = m(\text{P}) + m(\text{S}),$$

$$w(\text{S}) = m(\text{S}) / [\ m(\text{P}) + m(\text{S})\ ].$$

Preferably, *w*(S) is selected in such way to ensure that the ratio *n*(S') / *n*(A") of the amount of substance *n*(S') of N-H groups in the formaldehyde scavenger composition **S** to the amount of substance *n*(A") of free aldehyde groups -C(H)=O in the phenolic resin **P** obeys the relation 0.9 mol/mol ≤ *n*(S') / *n*(A") ≤ 1.5 mol/mol, preferably, 0.95 mol/mol ≤ *n*(S') / *n*(A") ≤ 1.30 mol/mol.

As it has to be ensured that the above relation 0.9 mol/mol ≤ *n*(S') / *n*(A") ≤ 1.5 mol/mol is maintained in the phenolic resin composition **R,** the optimum ratio *m*(S) / *m*(P) of the mass *m*(S) of the scavenger composition **S** and the mass *m*(P) of the phenolic resin **P** has to be chosen depending on the ratio *n*(CHO) / *n*(H*) of the amount of substance *n* (CHO) of aldehyde groups in the (cyclo)aliphatic aldehydes **A** having at least one aldehyde group - C(H)=O in its molecule, to the amount of substance *n*(H*) of reactive hydrogen atoms H*- in ortho or para-position to a phenolic hydroxyl group in the hydroxyaromatic compounds **H** having at least one hydroxyl group - OH bound to an aromatic carbon atom in its molecule, in the synthesis of the phenolic resin **P.** In a phenolic resin made from formaldehyde and (unsubstituted) phenol, with a stoichiometric ratio *n*(FA) / *n*(phenol) of the amount of substance *n*(FA) of formaldehyde to the amount of substance n(phenol) of phenol, of 1.5, in the reaction, which corresponds to *n*(CHO) / *n*(H*) = 0.5, the optimum ratio *m*(S) / *m*(P) is from 0.01 to 0.1, preferably, from 0.02 to 0.06. For a stoichiometric ratio *n*(FA) / n(phenol) of 2.2, the optimum ratio *m*(S) / *m*(P) has been found to be between 0.05 and 0.4, preferably, from 0.1 to 0.3.

Preferred cyclic ureas **UC** are ethyleneurea, propylene urea, and mixtures of both, preferably in combination with at least one aminocarboxylic acid **AA.**

The phenolic resin composition **R** of the present invention can be used in all applications where phenolic resins are used, such as adhesives, foams, mineral wool insulation binders, for laminates, composites, friction materials, sand mould and core binders in metal casting, and as binders for refractories. A preferred application is in abrasives, particularly, as make coat in coated abrasives. It has been shown that voids and bubbles usually formed between the grains and the backing or support layer can be at least partially, and mostly, completely avoided. This leads to longer life and consistent quality of coated abrasives.

Coated abrasives are usually provided in the form of sheets, belts, discs, and drums; they have a backing layer, also referred to as carrier or carrier material, which is usually selected from paper, special papers made from fibres which are impregnated and/or vulcanised, cloth made from cotton or synthetic fibres, fabrics including non-woven fabrics made from cotton or synthetic fibres, composite materials made from any of these, and polymer films. The backing layer is coated with a layer of the first coat ("make coat") and the wet coating is then sprinkled with abrasives grains, usually in a static electric field which supports the vertical alignment of the grains. The make coat solution usually contains a filler, in most cases, calcium carbonate. The grain size usually ranges, in the FEPA (Federation of European Producers of Abrasives) classification, for Macrogrit on paper (coarse-grained grit) from P12 to P220 (according to FEPA standard 43-1: 2006, mean diameter: 1815 μm to 68 μm), and for Microgrit on paper (fine-grained grit) from P240 to P5000 (according to FEPA standard 43-2: 2017, mean diameter: (58.5 ± 2) μm to 5 μm). During the next step which is the curing process of the make coat, the grains are fixed to the backing. A second coat ("size coat") is then applied which covers make coat and grains. The thickness of the size coat layer is frequently larger than that of the make coat.

The following experiments serve to illustrate the invention, and do not limit the scope of protection.

Examples

Example 1 Preparation of a Phenolic Resin with a ratio *n*(FA) / *n*(phenol) of 1.5

To a reactor equipped for distillation, 20.0 g of deionised water were added together with 630.4 g of phenol (100 %) and 18.5 g of an aqueous solution of sodium hydroxide NaOH [with a mass fraction $m(NaOH)/(m(NaOH) + m(H_2O))$ = 45 %; $m(NaOH)$ standing for the mass of sodium hydroxide, and $m(H_2O)$ standing for the mass of water in this solution] and heated to a temperature between 55 °C and 60 °C, preferably 58 °C. Then, 616.0 g of an aqueous solution of formaldehyde [with a mass fraction $m(FA) / (m(FA) + m(H_2O))$ = 49 %; $m(FA)$ standing for the mass of form aldehyde, and $m(H_2O)$ standing for the mass of water in this solution] was slowly added over ninety minutes at a temperature of 60 °C. The mixture was then heated to 70 °C and was stirred at this temperature until the water miscibility, measured at 23 °C, was between 1 mL / 3.5 g and 1 mL 14.0 g. Samples were taken for characterisation, see table 1 below.

Table 1 Unmodified Resin Characteristics - F/P ratio of 1.5

| Parameter | Symbol | Unit | Standard | Value |
|---|---|---|---|---|
| Mass Fraction of Solids | $w_S$ | % | DIN EN ISO 3251 | 78.5 |
| pH | pH | | DIN EN ISO 8975 | 8.4 |
| Mass Fraction of Free Formaldehyde | $w$(FFA) | % | DIN EN ISO 11402 | 0.84 |
| Water miscibility | $V_W$ | mL/g | DIN EN ISO 8989 | 4.0 |
| Mass Fraction of Free Phenol | w(FPh) | % | DIN EN ISO 8974 | 8.7 |

Example 2 Preparation of a Phenolic Resin with a ratio *n*(FA) / *n*(phenol) of 2.2

To a reactor equipped for distillation, 20.0 g of deionised water were added together with 485.2 g of phenol (100 %) and 19.5 g of an aqueous solution of sodium hydroxide NaOH [with a mass fraction $m(NaOH)/(m(NaOH) + m(H_2O))$ = 45 %; $m(NaOH)$ standing for the mass of sodium hydroxide, and $m(H_2O)$ standing for the mass of water in this solution] and heated to a a temperature between 55 °C and 60 °C, preferably 58 °C. Then, 685.65 g of an aqueous solution of formaldehyde [with a mass fraction $m(FA) / (m(FA) + m(H_2O))$ = 49 %; $m(FA)$ standing for the mass of form aldehyde, and $m(H_2O)$ standing for the mass of water in this solution] was slowly added over ninety minutes at a temperature of 60 °C. The mixture was then heated to 70 °C and was stirred at this temperature until the water miscibility, measured at 23 °C, was between 1 mL / 2.5 g and 1 mL/3.0 g. Samples were taken for characterisation, see table 2 below.

Table 2 Unmodified Resin Characteristics - F/P ratio of 2.2

| Parameter | Symbol | Unit | Standard | Value |
|---|---|---|---|---|
| Mass Fraction of Solids | $w_S$ | % | DIN EN ISO 3251 | 78.5 |
| pH | pH | | DIN EN ISO 8975 | 8.5 |
| Mass Fraction of Free Formaldehyde | $w$(FFA) | % | DIN EN ISO 11402 | 3.4 |
| Water miscibility | $V_W$ | mL/g | DIN EN ISO 8989 | 3.2 |
| Mass Fraction of Free Phenol | $w$(FPh) | % | DIN EN ISO 8974 | 2.3 |

Example 3 Mixtures of Phenolic Resins with Formaldehyde Scavengers

Mixtures of the phenolic resins of Example 1 with formaldehyde scavengers were prepared by admixing the formaldehyde scavengers according to the data in the following table 3. Five mixtures (3.1 through 3.5) were prepared, with mass fractions of the formaldehyde scavengers $w(S) = m(S) / [m(S) + m(P)]$, where $m(S)$ is the mass of (the solute of) the amine or amide used as formaldehyde scavenger, and $m(P)$ is the mass of the solids of the phenolic resin solution used.

Table 3 Mass Fractions of $w$(S) of Formaldehyde Scavengers in %

| Formaldehyde Scavenger | | 3.1 | 3.2 | 3.3 | 3.4 | 3.5 |
|---|---|---|---|---|---|---|
| Glycine | $w$(S) / % | 1.7 | | | | |
| Ammonia | $w$(S) / % | | 0.6 | | | |
| Urea | $w$(S) / % | | | 2.1 | | |

(continued)

| Formaldehyde Scavenger | | 3.1 | 3.2 | 3.3 | 3.4 | 3.5 |
|---|---|---|---|---|---|---|
| Ethyleneurea | *w*(S) / % | | | | 3.4 | |
| Thiourea | *w*(S) / % | | | | | 2.8 |

The mass of added formaldehyde scavengers was calculated stoichiometrically for each mixture. The resulting mixtures were subjected to distillation under reduced pressure at a temperature not exceeding 55 °C until a viscosity within the range of from 2700 mPa·s to 3200 mPa-s, measured at 20 °C, was reached. When the desired viscosity was reached, the mixture was cooled down to a temperature below 18 °C for further use.

The following characteristic data were measured on samples of mixtures 3.1 through 3.5, using the procedures according to the standards mentioned in Tables 1 and 2:

Table 4 Data of phenolic resin compositions

| Mixture | 3.1 | 3.2 | 3.3 | 3.4 | 3.5 |
|---|---|---|---|---|---|
| $w_{S/\%}$ | 78.6 | 78.5 | 78.6 | 78.7 | 77.4 |
| pH | 8.0 | 8.6 | 8.6 | 8.5 | 8.6 |
| *w*(FFA) / % | 0.06 | 0.09 | 0.4 | 0.04 | 0.4 |
| $V_W$ / (mL/g) | 4.5 | 3.5 | 4.0 | 3.6 | 3.7 |
| *w*(FPh) / % | 7.5 | 8.5 | 8.8 | 8.5 | 8.4 |

Example 4 Mixtures of Phenolic Resins with Formaldehyde Scavengers

Mixtures of the phenolic resins of Example 2 with formaldehyde scavengers were prepared by admixing the formaldehyde scavengers according to the data in the following table 5. Three mixtures (4.1 through 4.3) were prepared, with mass fractions of the formaldehyde scavengers $w(S) = m(S) / [m(S) + m(P)]$, where $m(S)$ is the mass of (the solute of) the amine or amide used as formaldehyde scavenger, and $m(P)$ is the mass of the solids of the phenolic resin solution used.

Table 5 Mass Fractions of *w*(S) of Formaldehyde Scavengers in %

| Formaldehyde Scavenger | | 4.1 | 4.2 | 4.3 |
|---|---|---|---|---|
| Glycine | *w(S)* / % | 7.2 | | |
| Urea | *w*(S) / % | | 8.7 | |
| Ethyleneurea | *w*(S) / % | | | 14.0 |

The mass of added formaldehyde scavengers was calculated stoichiometrically for each mixture. The resulting mixtures were subjected to distillation under reduced pressure at a temperature not exceeding 55 °C until a viscosity within the range of from 2700 mPa·s to 3200 mPa·s, measured at 20 °C, was reached. When the desired viscosity was reached, the mixture was cooled down to a temperature below 18 °C for further use.

The following characteristic data were measured on samples of mixtures 4.1 through 4.3, using the procedures according to the standards mentioned in Tables 1 and 2:

Table 6 Data of phenolic resin compositions

| Mixture | 4.1 | 4.2 | 4.3 |
|---|---|---|---|
| $w_{S\ /\ \%}$ | 79.5 | 78.5 | 75.6 |
| pH | 6.0 | 8.5 | 8.7 |
| *w*(FFA) / % | 1.7 | 1.39 | 0.09 |
| $V_W$ / (mL/g) | 1.7 | 3.2 | 3.7 |
| *w*(FPh) / % | 8.4 | 2.3 | 1.9 |

Example 5 Mixtures of Phenolic Resins with Mixtures of Formaldehyde Scavengers

Mixtures of the phenolic resins of Example 1 with mixtures of formaldehyde scavengers were prepared by admixing the formaldehyde scavenger mixtures according to the data in the following table 7. Two mixtures (5.1 and 5.2) were prepared, with mass fractions of the mixtures of formaldehyde scavengers $w(S) = m(S) / [m(S) + m(P)]$, where $m(S)$ is the sum of the masses of the formaldehyde scavengers used, and $m(P)$ is the mass of the solids of the phenolic resin solution used.

Table 7 Mass Fractions of $w(S)$ of Formaldehyde Scavengers in %

| Formaldehyde Scavenger | | 5.1 | 5.2 |
|---|---|---|---|
| Glycine | $w(S1)$ / % | 0.2 | 0.7 |
| Ethyleneurea | $w(S2)$ / % | 3.4 | |
| Melamine | $w(S3)$ / % | | 4.4 |
| Formaldehyde Scavenger Mixture | $w(S)$ / % | 3.6 | 5.1 |

The resulting mixtures were subjected to distillation under reduced pressure at a temperature not exceeding 55 °C until a viscosity within the range of from 2500 mPa·s to 3200 mPa·s, measured at 20 °C, was reached. When the desired viscosity was reached, the mixture was cooled down to a temperature below 18 °C for further use.

The following characteristic data were measured on samples of mixtures 5.1 and 5.2, using the procedures according to the standards mentioned in Tables 1 and 2:

Table 8 Data of phenolic resin compositions 5.1 and 5.2

| Mixture | 5.1 | 5.2 |
|---|---|---|
| $w_{S / \%}$ | 78.6 | 79.9 |
| pH | 8.4 | 7.6 |
| $w(PFA)$ / % | 0.09 | 0.13 |
| $V_W$ / (mL/g) | 3.9 | 3.5 |
| $w(FPh)$ / % | 8.4 | 7.6 |

Example 6 Application Testing - Evaluation of Bubble Formation

A resin film with a wet thickness of 200 µm was applied with an adjustable film applicator on a transparent polyester film as backing. It was cured together with abrasive grain (Type Semi-friable Fused Aluminium Oxide, bluefired ALODUR® BFRPLCC, from Imerys Fused Minerals GmbH, 9523 Villach, Austria) which was applied gravimetrically and cured at 105 °C for sixty minutes in a ventilated lab oven. The visual evaluation and comparison was done with a digital, reflective light microscope (TOMLOV 16MP 7" LCD, RaySmart VMS 700). Pictures were taken with a view from the uncoated side of the transparent film backing, and are shown in Figures 3.1 through 3.5, 4.1, 4.3, 5.1 and 5.2 as attached.

From inspection of these photographs, the following comments are given for the phenolic resin compositions of the Examples:

| | |
|---|---|
| 3.1 | Some smaller gas bubbles are compressed in some places, visible under the grains |
| 3.2 | Some smaller gas bubbles can be seen under the grains |
| 3.3 | A large number of larger gas bubbles can be seen under the grains |
| 3.4 | There are no visible bubbles |
| 3.5 | A large number of larger gas bubbles can be seen under the grains |
| 4.1 | A large number of larger gas bubbles can be seen under the grains |
| 4.3 | Some smaller gas bubbles can be seen under the grains |
| 5.1 | There are only a few small bubbles visible |

(continued)

| | |
|---|---|
| 5.2 | Some, but bigger gas bubbles under the grains visible |

The best results for suppression of bubble formation in the region between the backing surface and the grains have been obtained in the 3.4, 4.3, and 5.1, where ethyleneurea as cyclic urea CU is used as constituent in the formaldehyde scavenger S. Likewise, low values below 0.1 % have been obtained for the mass fraction of free formaldehyde.

## Claims

1. A phenolic resin composition **R** based on phenolic resins **P** made by reaction of hydroxyaromatic compounds **H** having at least one hydroxyl group -OH in its molecule, and (cyclo)aliphatic aldehydes **A** having at least one aldehyde group -C(H)=O in its molecule, which phenolic resin composition **R** further comprises a formaldehyde scavenger **S** which comprises at least one cyclic urea **UC** which is selected from the group consisting of alkylene ureas of formula **I**

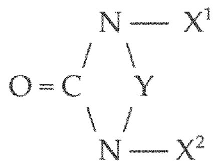

Formula I

where $X^1$ and $X^2$ are selected, independently from each other, from the group consisting of hydrogen atoms H, and alkyl groups having from one to ten carbon atoms, preferably, methyl, ethyl, butyl, n-hexyl, octyl, and nonyl, and Y is an optionally substituted alkanediyl or cycloalkanediyl group having from two to ten, preferably from two to six, carbon atoms, and at least one of $X^1$ and $X^2$ is a hydrogen atom.

2. The phenolic resin composition **R** of claim 1 wherein the formaldehyde scavenger **S** further comprises at least one of aliphatic aminocarboxylic acids **AA** having from two to twelve carbon atoms.

3. The phenolic resin composition **R** of claim 1 or of claim 2 wherein the formaldehyde scavenger S further comprises at least one of a cyclic urea **UCT** which is selected from the group consisting of alkylene thioureas of formula II

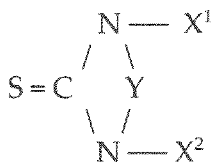

Formula II

where $X^3$ and $X^4$ are selected, independently from each other, from the group consisting of hydrogen atoms H, alkyl groups having from one to ten carbon atoms, preferably, methyl, ethyl, butyl, n-hexyl, octyl, and nonyl, and Y is an optionally substituted alkanediyl or cycloalkanediyl group having from two to ten, preferably from two to six, carbon atoms, and at least one of $X^3$ and $X^4$ is a hydrogen atom.

4. The phenolic resin composition **R** of claim 1 or of claim 2 or of claim 3 wherein the formaldehyde scavenger **S** further comprises at least one of aliphatic bisureas **BU** made by reaction of urea with a primary diamine **D** of formula III

$$H_2N\text{-}\mathbf{Z}\text{-}NH_2 \qquad \text{(Formula III)},$$

wherein **Z** is a polymeric or oligomeric oxyalkylene group of formula IV

$$-\ CH_2\text{-}CHR\text{-}(O\text{-}CH_2\text{-}CHR'\text{-})_n\text{-}, \qquad \text{(Formula IV)}$$

wherein n is at least one, and up to fifteen, and R and any of R' are selected, independently from each other, from

-H and $-CH_3$, and
wherein the ratio $n$(U) / $n$(D) of the amount of substance of urea $n$(U) and the amount of substance $n$(D) of the primary diamine **D** in the reaction of both is at least 1 mol/mol, and not more than 2 mol/mol.

**5.** The phenolic resin composition **R** of claim 1 or of claim 2 or of claim 3 or of claim 4 wherein the ratio $n$(A') / $n$(H) of the amount of substance $n$(A') of aldehyde groups -C(H)=O in the (cyclo)aliphatic aldehydes **A** to the amount of substance $n$(H) of hydroxyaromatic compounds **H** in the synthesis of the phenolic resins **P** obeys the relation 1.1 mol/mol ≤ $n$(A') / $n$(H) ≤ 3.0 mol/mol.

**6.** The phenolic resin composition **R** of any one of claim 1 or of claim 2 or of claim 3 or of claim 5 made by admixing the formaldehyde scavenger **S** to the phenolic resin **P,** wherein the ratio $n$(S') / $n$(A") of the amount of substance $n$(S') of N-H groups in the formaldehyde scavenger composition **S** to the amount of substance $n$(A") of free aldehyde groups -C(H)=O in the phenolic resin **P** obeys the relation 0.9 mol/mol ≤ $n$(S') / $n$(A") ≤ 1.5 mol/mol, preferably, 0.95 mol/mol ≤ $n$(S') / $n$(A") ≤ 1.30 mol/mol.

**7.** The phenolic resin composition **R** of any one of claim 1 or of claim 2 or of claim 3 or of claim 4 or of claim 5 or of claim 6 wherein the cyclic urea **UC** is ethyleneurea or propyleneurea, or a mixture of both.

**8.** The phenolic resin composition **R** of any one of claim 1 or of claim 2 or of claim 3 or of claim 4 or of claim 5 or of claim 6 or of claim 7 where the formaldehyde scavenger composition S additionally comprises at least one aminocarboxylic acid, preferably, glycine.

**9.** The phenolic resin composition **R** of claim 8 where the ratio $m$(AA) / $m$(CU) of the mass $m$(AA) of the aminocarboxylic acid to the mass $m$(CU) of cyclic ureas present in the composition obeys the relation 3 g/g ≤ $m$(AA / $m$(CU) ≤ 10 g/g.

**10.** A method of use of the phenolic resin composition **R** of any one of claim 1 or of claim 2 or of claim 3 or of claim 4 or of claim 5 or of claim 6 or of claim 7 or of claim 8 or of claim 9 as resin for make coat in coated abrasives, wherein a backing preferably selected from the group consisting of paper, Kraft paper, paper modified with rubber, acrylic resin, or other polymers, woven cotton, linen, synthetic fibres, or vulcanised fibres is coated with a make coat comprising the phenolic resins composition **R** and at least one filler, and the coating is at least partially cured before applying the grain.

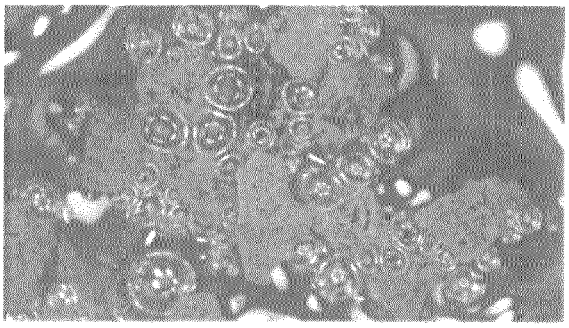

3.3

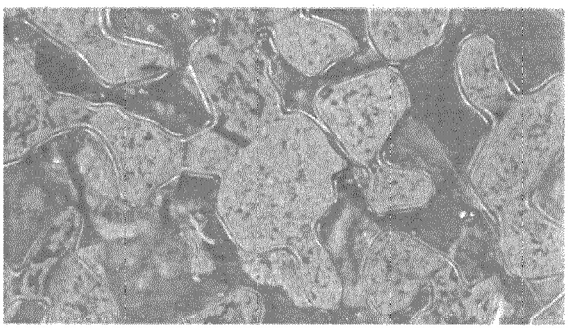

3.2

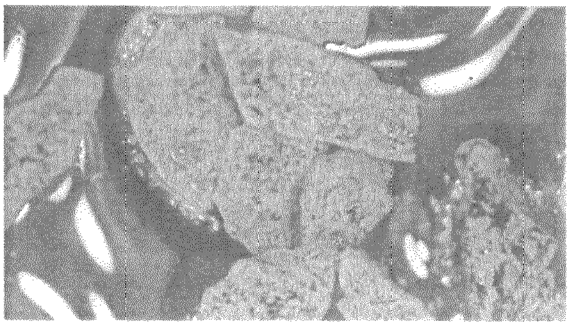

3.1

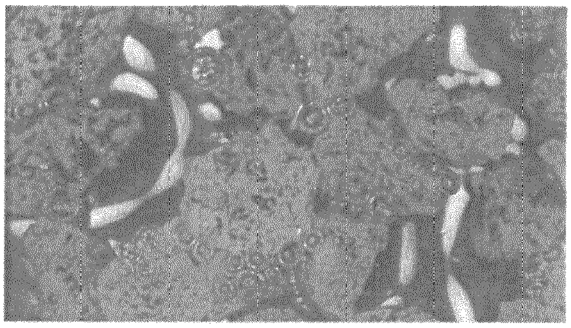
3.5

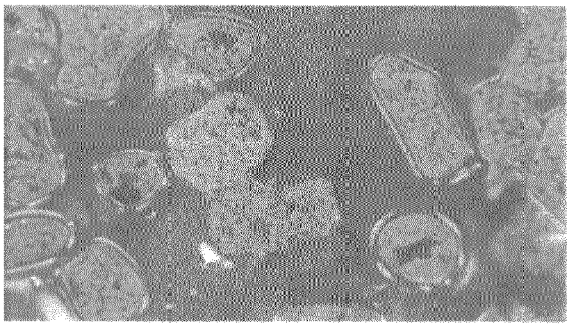
3.4

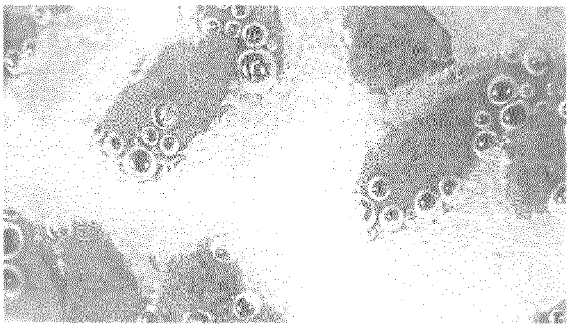
4.1

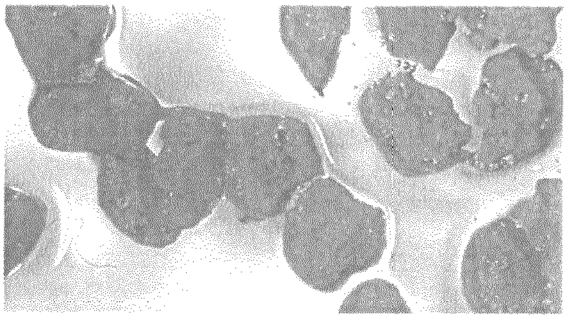

4.3

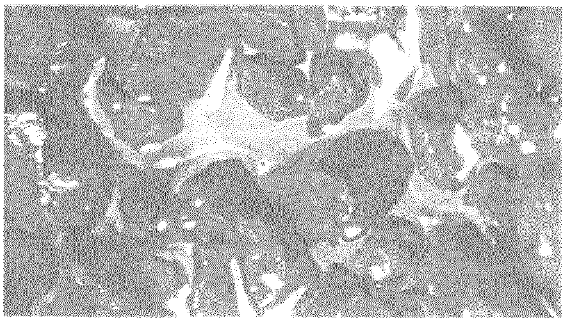

5.1

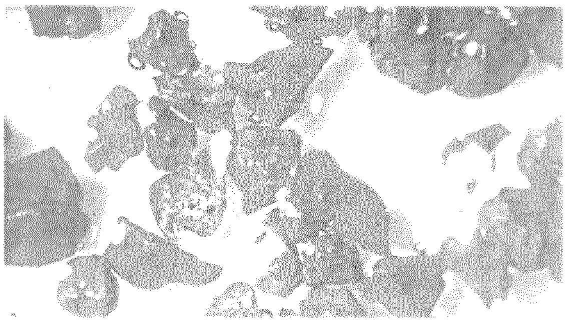

5.2

Europäisches Patentamt
European Patent Office
Office européen des brevets

# EUROPEAN SEARCH REPORT

Application Number
EP 23 22 0887

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2021/087327 A1 (PRIEBE CHRISTIAN [DE]) 25 March 2021 (2021-03-25)<br>* page 9; example B6; table 1 *<br>----- | 1,5-7<br><br>2-4,8-10 | INV.<br>C08G8/10<br>C09J161/06<br>C09D161/06<br><br>ADD.<br>C08K5/3442 |
| X<br><br>A | WO 97/24385 A1 (BORDEN INC [US]; GERBER ARTHUR H [US]) 10 July 1997 (1997-07-10)<br>* page 37; example 5 *<br>* page 25, line 24 - line 30 *<br>* page 5, line 8 - line 12 *<br>----- | 1,5-7,10<br><br>2-4,8,9 | |
| X<br><br>A | US 2022/364283 A1 (NATU AMEYA [US] ET AL) 17 November 2022 (2022-11-17)<br>* page 11; example 3; table 1 *<br>----- | 1,5-7<br><br>2-4,8-10 | |

TECHNICAL FIELDS SEARCHED (IPC)

C08K
C09J
C08G
C09D

The present search report has been drawn up for all claims

1

| Place of search | Date of completion of the search | Examiner |
|---|---|---|
| Munich | 15 May 2024 | Wohnhaas, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 22 0887

This annex lists the patent family members relating to the patent documents cited in the above-mentioned European search report. The members are as contained in the European Patent Office EDP file on
The European Patent Office is in no way liable for these particulars which are merely given for the purpose of information.

15-05-2024

| Patent document cited in search report | Publication date | Patent family member(s) | Publication date |
|---|---|---|---|
| US 2021087327 A1 | 25-03-2021 | BR 112020012350 A2 | 24-11-2020 |
| | | CA 3083304 A1 | 18-07-2019 |
| | | CN 111566139 A | 21-08-2020 |
| | | DE 102018100694 A1 | 18-07-2019 |
| | | EP 3737707 A1 | 18-11-2020 |
| | | JP 7458982 B2 | 01-04-2024 |
| | | JP 2021510746 A | 30-04-2021 |
| | | KR 20200104317 A | 03-09-2020 |
| | | RU 2020119962 A | 17-12-2021 |
| | | US 2021087327 A1 | 25-03-2021 |
| | | WO 2019137583 A1 | 18-07-2019 |
| WO 9724385 A1 | 10-07-1997 | AR 005323 A1 | 28-04-1999 |
| | | AT E232885 T1 | 15-03-2003 |
| | | AU 718352 B2 | 13-04-2000 |
| | | BR 9612464 A | 13-07-1999 |
| | | CA 2240692 A1 | 10-07-1997 |
| | | CN 1209144 A | 24-02-1999 |
| | | DE 69626309 T2 | 27-11-2003 |
| | | DK 0869980 T3 | 10-06-2003 |
| | | EP 0869980 A1 | 14-10-1998 |
| | | ES 2192624 T3 | 16-10-2003 |
| | | HK 1018471 A1 | 24-12-1999 |
| | | JP 4611457 B2 | 12-01-2011 |
| | | JP 2000502738 A | 07-03-2000 |
| | | KR 19990076882 A | 25-10-1999 |
| | | MY 115891 A | 30-09-2003 |
| | | PT 869980 E | 31-07-2003 |
| | | WO 9724385 A1 | 10-07-1997 |
| US 2022364283 A1 | 17-11-2022 | CA 3157450 A1 | 12-11-2022 |
| | | CN 115340652 A | 15-11-2022 |
| | | EP 4089218 A1 | 16-11-2022 |
| | | FI 4089218 T3 | 21-02-2024 |
| | | SI 4089218 T1 | 30-04-2024 |
| | | US 2022364283 A1 | 17-11-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 942808 A
- US 5270343 A
- US 5358758 A


### Non-patent literature cited in the description


- **M. TAMURA et al.** *Green Chemistry*, 2013, vol. 15, 1567-1577